# EUROPEAN PATENT APPLICATION

(11) **EP 3 705 715 A1**
(43) Date of publication of application: **09.09.2020**
(21) Application number: 20161257.9
(22) Date of filing: 05.03.2020
(51) Int. Cl.: F03B 17/06

(54) **SYSTEMS AND METHODS FOR GENERATING ENERGY FROM A LIQUID FLOW**

(30) Priority: 05.03.2019 BE 201905136
(71) Applicant: Mataro Holding BV, 4822 SN Breda (NL)
(72) Inventor: RIJKE, Reinier Johannes, 4822SN Breda (NL)
(74) Representative: DenK iP

(57) **Abstract**

An energy generation system (100) for generating energy from a liquid flow is described The energy generation system (100) comprises a turbine (110) for converting flow energy from a fluid flow into mechanical rotation energy of a turbine shaft (112) by means of a rotor blade system (114) and a generator (120) for generating electrical energy from the mechanical rotation energy of the turbine shaft (112) The energy generation system (100) also comprises a gearbox positioned between the turbine and the generator and also at least one liquid coupling (130) for absorbing vibrations and variations in the rotations of the turbine, wherein the at least one liquid coupling is positioned between the turbine (110) and the gearbox (140) or positioned between the gearbox (140) and the generator (120).

## Description

### Field of application of the invention

This invention generally relates to energy production. More specifically, this invention relates to turbines for generating power from a fluid flow.

### Background of the invention

The search for environmentally friendly, sustainable and renewable energy is giving a boost to the development of energy generation systems based on gas flow or liquid flow. These systems can for example be based on wind, tidal action, flowing water, etc.

The energy generation systems can indeed produce energy in an environmentally friendly and sustainable manner, but the use of natural elements such as wind, tidal action and flowing water does result in the occurrence of vibrations and sudden variations in the drive of the turbine in the energy generation system. These vibrations and sudden variations typically propagate further in the energy generation system, putting unnecessary strain on the shafts, the generator and possibly other components.

Consequently, there is a need for better energy generation systems.

### Summary of the invention

It is an objective of the embodiments of the present invention to provide good systems and methods for generating energy by means of a fluid flow, for example a liquid flow.

It is an advantage of embodiments of the present invention that methods and systems are provided which make it possible to limit the forces exerted on components of a liquid flow turbine, such as, for example, on the shaft.

It is an advantage of embodiments of the present invention that liquid flow turbines can be provided which have high stability and a long service life.

It is an advantage of embodiments of the present invention that liquid flow turbines can be provided with a high efficiency because they are more stable than systems of the prior art.

It is an advantage of embodiments of the present invention that liquid flow turbines can be provided wherein deformation of components, such as, for example, the shaft of the turbine, can be reduced or avoided.

This objective is achieved by a system and/or a method according to the present invention.

In a first aspect, the present invention relates to an energy generation system for generating energy from a liquid flow. The energy generation system comprises a turbine for converting flow energy from a fluid flow into mechanical rotation energy of a turbine shaft by means of a rotor blade system and a generator for generating electrical energy from the mechanical rotation energy of the turbine shaft. The system is characterised by the fact that the energy generation system further comprises a gearbox positioned between the turbine and the generator and also comprises at least one liquid coupling for absorbing vibrations and variations in the rotations of the turbine, wherein this liquid coupling is positioned between the turbine and the gearbox or positioned between the gearbox and the generator.

The rotor blade system may comprise rotor blades that are substantially parallel to the turbine shaft.

It should be noted that where reference is made in the present text to 'rotor blade system', reference may also be made to a vane system. The use of this wording does not limit the turbine to a drag-based system or to a lift-based system and both principles should be understood within this terminology, as well as turbines based on other principles. In addition to vanes, the terminology 'wing profiles' may also be used.

It is an advantage of embodiments of the present invention that they can be used optimally for orthogonally flowing energy generation systems wherein the fluid flow flows orthogonally in relation to the turbine shaft.

It is an advantage of embodiments of the present invention that they can be optimally used for turbines which are lift turbines. Such lift turbines can be either vertical-axis or horizontal-axis turbines.

It should be noted that where the term 'liquid flow' is used in the present invention, a 'fluid flow' can be referred to in an equivalent manner. Thus, the turbine in the system can operate on the basis of either a gas flow or a fluid flow. It is an advantage of embodiments of the present invention that moments and torques on components of the energy generation system can be limited, so that they place less strain on components of the energy generation system.

It is an advantage of embodiments of the present invention that not only moments and torques on the shafts in the energy generation system are limited, but also the moments and torques provided on the electric generator are limited.

It is an advantage of embodiments of the present invention that vibrations and unexpected shocks can be absorbed by, for example, an unexpected change in the fluid flow, without placing a strain on the components of the energy generation system.

It is an advantage of embodiments of the present invention that moments and torques on the gearbox can be limited, so that they place less strain on components of the energy generation system.

It is an advantage of embodiments of the present invention that the advantages can also be achieved for energy generation systems wherein the generator operates at a different rotational speed than the turbine.

The liquid coupling can have, as supply shaft, the turbine shaft or a shaft parallel to the turbine shaft.

The gearbox or the generator can be situated on the output shaft of the liquid coupling. The energy generation system may also comprise a gearbox positioned between the turbine and the generator, wherein the energy generation system comprises at least one liquid coupling positioned between the gearbox and the generator.

It is an advantage of embodiments of the present invention that moments and torques on the generator can be limited, so that they place less strain on components of the energy generation system.

The liquid coupling can have a supply shaft that is substantially perpendicular to the turbine shaft.

The turbine can be a horizontal-shaft turbine.

The turbine can be a vertical-shaft turbine.

The energy generation system can further comprise various bearings.

The energy generation system can comprise further couplings.

In another aspect, the present invention relates to a method for installing an energy generation system, the method comprising
obtaining a turbine for converting flow energy from a fluid flow into mechanical rotation energy of a turbine shaft by means of a rotor blade system,
obtaining a generator for generating electrical energy from the mechanical rotation energy of the turbine shaft.

The energy generation system further comprises a gearbox positioned between the turbine and the generator.

The method comprises installing at least one liquid coupling suitable for absorbing vibrations and variations in the rotation of the turbine and positioned between the turbine and the gearbox or positioned between the gearbox and the generator.

In yet another aspect, the present invention comprises a method for upgrading an energy generation system. The energy generation system comprises a turbine for converting flow energy from a fluid flow into mechanical rotation energy of a turbine shaft by means of a rotor blade system and a generator for generating electrical energy from the mechanical rotation energy of the turbine shaft.

The energy generation system further comprises a gearbox positioned between the turbine and the generator.

The method comprises installing at least one liquid coupling suitable for absorbing vibrations and variations in the rotation of the turbine and positioned between the turbine and the gearbox or positioned between the gearbox and the generator.

It is an advantage of embodiments of the present invention that existing energy generation systems can be adapted in order to have less or no problems with moments and torques on the different components of the energy generation system.

Specific and preferred aspects of the invention are included in the attached independent and dependent claims. Features of the dependent claims may be combined with features of the independent claims and with features of other dependent claims as indicated and not only as explicitly presented in the claims. These and other aspects of the invention will become clear from, and be clarified with reference to, the embodiment(s) described below.

### Brief description of the figures

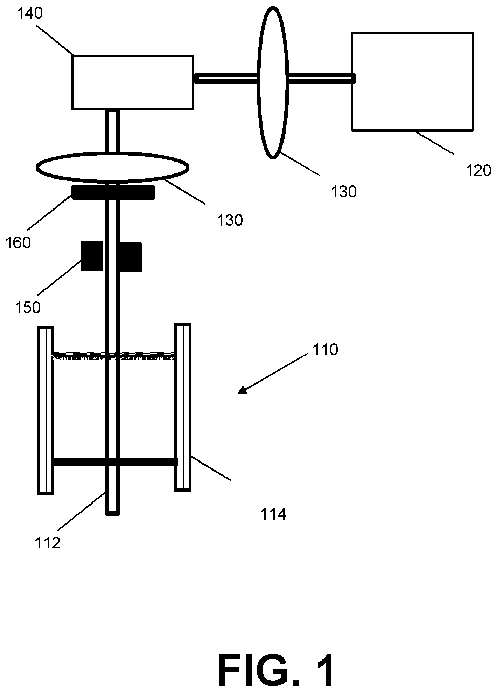

FIG. 1 illustrates the general concept of an energy generation system according to an embodiment of the present invention.

The figures are only schematic and not limiting. In the figures the dimensions of some components may be exaggerated and may not be presented to scale for illustrative purposes.

Reference numbers in the claims should not be interpreted as limiting the scope of protection. In the different figures, the same reference numbers refer to the same or similar elements.

### Detailed description of illustrative embodiments

The present invention will be described with regard to particular embodiments and with reference to certain drawings; however, the invention is not limited thereto but is limited only by the claims. The described drawings are only schematic and not limiting. In the drawings, for illustrative purposes, the dimensions of some elements may be increased and not drawn to scale. The dimensions and the relative dimensions sometimes do not correspond to the actual practical embodiment of the invention.

Furthermore, the terms 'first', 'second', 'third' and the like are used in the description and in the claims to distinguish similar elements and are not necessarily used to describe an order, whether in time, spatially, by ranking or in any other way. It should be understood that the terms used in this manner are interchangeable under appropriate circumstances and that the embodiments of the invention described herein are capable of operating in an order other than that described or represented herein.

In addition, the terms 'top', 'bottom', 'front' and the like in the description and claims are used for descriptive purposes and not necessarily to describe relative positions. It should be understood that the terms thus used may be interchangeable under given circumstances and that the embodiments of the invention described herein are also suitable for operating in orientations other than those described or represented herein.

It should be noted that the term 'comprises', as used in the claims, should not be interpreted as limited to the means described thereafter; this term does not exclude other elements or steps. It may thus be interpreted as specifying the presence of the mentioned features, values, steps or components to which reference is made, but does not exclude the presence or addition of one or more other features, values, steps or components, or groups thereof. Thus, the scope of the expression 'a device comprising means A and B' should not be limited to devices consisting of components A and B only. It means that, with regard to the present invention, A and B are the only relevant components of the device. Reference throughout this specification to 'one embodiment' or 'an embodiment' means that a specific feature, structure or characteristic described in connection with the embodiment is included in at least one embodiment of the present invention. Thus, the occurrence of the expressions 'in one embodiment' or 'in an embodiment' in various places throughout this specification need not necessarily refer to the same embodiment each time but may do so. Furthermore, the specific features, structures or characteristics may be combined in any appropriate manner, as would be clear to an average person skilled in the art on the basis of this disclosure, in one or more embodiments.

Similarly, it should be acknowledged that in the description of exemplary embodiments of the invention, various features of the invention are sometimes grouped together into a single embodiment, figure or description thereof with the aim of streamlining the disclosure and aiding in the understanding of one or more of the various inventive aspects. In any event, this method of disclosure should not be interpreted as reflecting an intention that the invention requires more features than are explicitly mentioned in each claim. Rather, as the following claims reflect, inventive aspects are in present less than all the features of one single previously disclosed embodiment. Thus, the claims following the detailed description are hereby explicitly included in this detailed description, with each stand-alone claim as a separate embodiment of this invention.

Furthermore, while some of the embodiments described herein comprise some, but not other, features included in other embodiments, combinations of features of different embodiments are intended to be situated within the scope of the invention and constitute these different embodiments, as would be understood by the person skilled in the art. For example, in the following claims, any of the embodiments described may be used in any combination.

Numerous specific details are put forward in the description provided here. In any event, it can be understood that embodiments of the invention can be embodied without these specific details. In other cases, well-known methods, structures and techniques are not shown in detail in order to keep this description clear. Where reference is made in embodiments of the present invention to a fluid flow, this refers to a flow of a gas, a steam or a liquid.

In a first aspect, the present invention relates to an energy generation system for generating energy from a liquid flow. Embodiments of the present invention are particularly advantageous in liquid flow-based turbines, such as, for example, turbines that operate on the basis of tidal action, that operate in a flowing channel, or that operate on the basis of falling water. However, the invention is not limited thereto and also relates to systems in which the turbine is based on other liquid flows, as well as systems in which the operation is based on a gas flow or steam flow.

In embodiments of the present invention, the energy generation system comprises a turbine for converting flow energy from a fluid stream into mechanical rotation energy from a turbine shaft. This conversion is typically carried out by means of a rotor blade system. The present invention is not limited by the specific type of turbine and may, in principle, be used with any type of turbine. Examples of possible turbines are impulse turbines, reaction turbines, hydraulic turbines such as, for example, Francis turbines, Kaplan turbines, Pelton turbines, gas turbines, steam turbines, wind turbines, Darrieus turbines, Savonius turbines, etc. The system is in some embodiments based on a vertical-axis turbine, while in other embodiments it is based on a horizontal-axis turbine.

In advantageous embodiments, the rotor blade system comprises rotor blades that are substantially parallel to the turbine shaft.

The energy generation system further comprises also a generator for generating electrical energy from the mechanical rotation energy of the turbine shaft. In this case, the generator may have an input based on the same rotational speed as that of the turbine shaft, or alternatively a gearbox may be provided to convert the rotational speed of the turbine shaft into a suitable rotational speed for the generator shaft, i.e. the shaft through which the mechanical rotation energy is fed into the generator. Gearboxes and generators as such are sufficiently known in the field and therefore reference is made to the prior art for the specific characteristics of gearboxes and generators. It should be noted that the present invention is not limited by the specific type of generator used, nor by whether or not a gearbox or the specific type thereof is used.

In embodiments of the present invention, the energy generation system further comprises a gearbox positioned between the turbine and the generator.

Embodiments of the present invention are characterised by the fact that they comprise at least one liquid coupling for absorbing vibrations and variations in the rotations of the turbine, wherein the at least one liquid coupling is positioned between the turbine and the gearbox or positioned between the gearbox and the generator. This liquid coupling ensures that vibrations, shocks and other variations regarding moments and/or torques in the system are reduced, so that they do not strain the different components of the system. This applies to the shaft of the turbine, any other shafts in the system, to the generator and also to the gearbox. In embodiments of the present invention, one or more, for example two, liquid couplings may be present. The one or more liquid couplings may be positioned between the turbine and the gearbox, or between the gearbox and the generator. Depending on the type of gearbox used and the position of the generator, the liquid coupling may have shafts which are parallel to the turbine shaft or have a different direction, for example perpendicular thereto.

Liquid couplings as such are known. The liquid coupling typically comprises a housing, which itself comprises a transmission liquid and liquid coupling turbines, typically two liquid coupling turbines. Typically the first liquid coupling turbine, also called liquid coupling input turbine, is connected to an input shaft of the liquid coupling. The second liquid coupling turbine, also called liquid coupling output turbine, is connected to the output shaft of the liquid coupling. In systems according to the present invention, the generator or the gearbox is further typically connected to this output shaft of the liquid coupling, depending on the position of the liquid coupling. The housing must typically have good seals so that no leakage of the liquid from the liquid coupling occurs. The transmission liquid used in the liquid coupling can in principle be any type of liquid but is often an oil. The liquid coupling is based on the following principle. By virtue of the movement of the liquid coupling input turbine, which typically moves under the impulse of the turbine shaft (either directly because the input shaft corresponds to the turbine shaft, or indirectly due to movement of the input shaft via a gearbox driven by the turbine shaft), the transmission liquid in the housing of the liquid coupling is set in motion. The transmission fluid typically undergoes a rotational movement, i.e. a toroidal movement. This movement of the liquid results in the inducement of a movement of the liquid coupling output turbine, which thus drives the output shaft. In some embodiments, the liquid coupling input turbine is situated centrally in the housing and the liquid coupling output turbine is situated at the outer edge of the housing. The rotation of the liquid coupling input turbine then acts as a centrifugal pump that pushes the transmission fluid to the liquid coupling output turbine.

Because the rotation is not transmitted directly but by means of a transmission fluid movement, vibrations and sudden variations in the rotation of the turbine of the energy generation system are smoothed, as a result of which they place less or no strain on the different components of the energy generation system.

In addition to the components as described above, other elements may also be present in the energy generation system, such as, for example, bearings or couplings. Embodiments of the present invention are therefore not limited thereby.

By way of illustration, embodiments of the present invention not being limited thereby, a schematic representation of an exemplary energy generation system is shown in FIG. 1. FIG. 1 shows an energy generation system 100, which shows a turbine 110 with a turbine shaft 112 and a rotor blade system 114, as well as a generator 120. It should be noted that in the present example the generator has a drive shaft perpendicular to the turbine shaft, but that the generator can also be in a position wherein the drive shaft is parallel to the turbine shaft. In addition, liquid coupling 130 and gearbox 140 are also shown. For the liquid coupling 130, two possible positions are shown wherein, in principle, a liquid coupling is present at only one of these positions, although in some embodiments it is also possible for just two liquid couplings 130 to be present, one at each of the positions shown. Possible additional bearings 150 and couplings 160 are also shown.

An exemplary liquid coupling typically comprises a housing, an input shaft, a liquid coupling input turbine, a transmission fluid, a liquid coupling output turbine and an output shaft. Other elements may also be present as known by the person skilled in the art.

In a second aspect, the present invention relates to a method for installing an energy generation system. The method comprises obtaining a turbine for converting flow energy from a fluid flow into mechanical rotation energy of a turbine shaft by means of a rotor blade system and obtaining a generator for generating electrical energy from the mechanical rotation energy of the turbine shaft. The method also comprises obtaining a gearbox positioned between the turbine and the generator. The method is further characterised by the installation of at least one liquid coupling which is suitable for absorbing vibrations and variations in the rotation of the turbine and positioned between the turbine and the gearbox or positioned between the gearbox and the generator. Further characteristics of the method comprise installing elements of the energy generation system as described in the first aspect.

In a third aspect, the present invention relates to a method for upgrading an existing energy generation system. The existing energy generation system comprises a turbine for converting flow energy from a fluid flow into mechanical rotation energy of a turbine shaft by means of a rotor blade system and a generator for generating electrical energy from the mechanical rotation energy of the turbine shaft, the energy generation system further comprising a gearbox (140) positioned between the turbine and the generator.

The method of upgrading comprises installing at least one liquid coupling which is suitable for absorbing vibrations and variations in the rotation of the turbine and positioned between the turbine and the gearbox or positioned between the gearbox and the generator. This installation may include adjusting the respective shafts.

The different aspects can be easily combined with one another, and the combinations thus also correspond to embodiments according to the present invention.

## Claims

1. An energy generation system (100) for generating energy from a liquid flow, the energy generation system (100) comprising
- a turbine (110) for converting flow energy from a fluid flow into mechanical rotation energy of a turbine shaft (112) by means of a rotor blade system (114),
- a generator (120) for generating electrical energy from the mechanical rotation energy of the turbine shaft (112),
**characterised in that**
the energy generation system (100) further comprises a gearbox (140) positioned between the turbine (110) and the generator (120), and wherein the energy generation system (100) also comprises at least one liquid coupling (130) for absorbing vibrations and variations in the rotations of the turbine, wherein the at least one liquid coupling (130) is positioned between the turbine (110) and the gearbox (140) or positioned between the gearbox (140) and the generator (120).

2. An energy generation system (100) according to claim 1, wherein the liquid coupling has the turbine shaft or a shaft parallel thereto as supply shaft.

3. An energy generation system (100) according to claim 1, wherein the liquid coupling has the turbine shaft as supply shaft and wherein the gearbox or the generator is situated on the output shaft of the liquid coupling.

4. An energy generation system (100) according to claim 1, wherein the liquid coupling has, as supply shaft, a shaft substantially perpendicular to the turbine shaft.

5. An energy generation system (100) according to any of the preceding claims, wherein the rotor blade system (114) comprises rotor blades substantially parallel to the turbine shaft.

6. An energy generation system (100) according to any of the preceding claims, wherein the turbine is a lift turbine.

7. An energy generation system (100) according to any of the preceding claims, wherein the turbine (110) is a horizontal-axis turbine.

8. An energy generation system (100) according to any of the preceding claims, wherein the turbine (110) is a vertical-axis turbine.

9. An energy generation system (100) according to any of claims 1 to 5, wherein the turbine (110) is a vertical-axis turbine.

10. An energy generation system (100) according to any of the preceding claims, wherein the energy generation system (100) further comprises various bearings.

11. An energy generation system (100) according to any of the preceding claims, wherein the energy generation system (100) comprises further couplings.

12. A method for installing an energy generation system (100), the method comprising
obtaining a turbine (110) for converting flow energy from a fluid flow into mechanical rotation energy of a turbine shaft (112) by means of a rotor blade system (114),
obtaining a generator (120) for generating electrical energy from the mechanical rotation energy of the turbine shaft (112),
**characterised in that** the method comprises
obtaining a gearbox (140) positioned between the turbine (110) and the generator (120), and
installing at least one liquid coupling (130) suitable for absorbing vibrations and variations in the rotation of the turbine and positioned between the turbine (110) and the gearbox (140) or positioned between the gearbox (140) and the generator (120).

13. A method for upgrading an energy generation system (100), the energy generation system (100) comprising a turbine (110) for converting flow energy from a fluid flow into mechanical rotation energy of a turbine shaft (112) by means of a rotor blade system (114) and a generator (120) for generating electrical energy from the mechanical rotation energy of the turbine shaft (112), the energy generation system (100) further comprising a gearbox (140) positioned between the turbine (110) and the generator (120), the method comprising
installing at least one liquid coupling (130) which is suitable for absorbing vibrations and variations in the rotation of the turbine and positioned between the turbine (110) and the gearbox (140) or positioned between the gearbox (140) and the generator (120).
